# EUROPEAN PATENT APPLICATION

(11) **EP 3 257 368 A1**
(43) Date of publication of application: **20.12.2017**
(21) Application number: 17175699.2
(22) Date of filing: 13.06.2017
(51) Int. Cl.: A01K 5/00

(54) **DEVICE FOR DISTRIBUTING MATERIAL IN GRANULES OR IN FILAMENTS**

(30) Priority: 14.06.2016 IT UA20168537 U
(71) Applicant: Studio Progettazione Industriale di Pecis Ing. Luigi S.A.S., 24121 Bergamo (IT)
(72) Inventor: PECIS, Luigi, 24127 Bergamo (IT)
(74) Representative: Modiano, Micaela Nadia

(57) **Abstract**

A device for distributing material in granules or in filaments (1), which comprises two mutually opposite shoulders (3) that support at least one cage (5) that can rotate about its own axis and is connected to motor means (7), the cage (5) being defined by a pair of mutually opposite plates (9) that are mounted so that they can rotate on a respective one of the shoulders (3) and by a plurality of longitudinal bars (11) fixed to the peripheral region of the plates (9); the plates are rigidly connected to each other exclusively by way of the bars (11) and without a central shaft; the bars (11) comprise a quadrangular tubular profiled member; the tubular profiled members constitute the supporting structure of the cage (5).

## Description

The present invention relates to a device for distributing material in granules or in filaments, in particular fodder.

Devices are known for the distribution of fodder for animals which are mounted on board a vehicle, typically a quadricycle, and which draw the fodder from a reservoir transported by the vehicle in order to distribute it along a manger as the vehicle advances. The fodder is generally constituted by unsorted or loose products, such as for example, forage or cut plants, but also granular food products and seeds.

These devices or other conventional devices in other sectors, which typically use a plurality of vanes that rotate about corresponding central shafts, are not free from drawbacks, among which is the fact that the dispensing of the product in granules or in filaments often occurs in an inefficient manner.

In particular the above mentioned devices for the distribution of fodder have the drawback of often becoming engulfed and thus requiring the machine to be shut down, as well as the manual intervention of an operator.

This inefficiency of distribution of the fodder is a drawback especially in those cases in which the movement of the head of the animals is impeded and, thus, some animals risk not receiving a sufficient quantity of fodder in their portion of the manger.

The operator is therefore forced to manually perform the redistribution of the fodder.

Devices for the distribution of material in granules or in filaments further have the drawback of dispensing relatively reduced volumes of material.

Conventional distribution devices further have structures that are often cumbersome and complex, including from the point of view of the operating kinematics.

The aim of the present invention is to provide a device for dispensing material in granules or in filaments, for example fodder for animals, which is capable of improving the known art in one or more of the above mentioned aspects.

Within this aim, an object of the present invention is to provide a device for the distribution of fodder which can be installed on a traditional vehicle and which makes it possible to obtain an efficient distribution of fodder along the entire area designated as manger which is traveled by the vehicle.

Another object of the present invention is to provide a device for dispensing material in granules or in filaments that makes it possible to vary the tools adapted for the distribution based on requirements and/or on the type or texture of the material to be distributed.

A further object of the present invention is to provide a device for dispensing material in granules or in filaments that does not suffer from the phenomena of becoming engulfed caused by the material, and which is capable of dispensing high volumes of material.

Another object of the present invention is to provide a device that is simple to provide and at the same time is structurally very strong.

Another object of the present invention consists in providing a device for dispensing material in granules or in filaments that offers reduced encumbrances without this being at the expense of the quantity of fodder that can be dispensed.

This aim and these and other objects which will become better apparent hereinafter are achieved by a device according to claim 1.

Further characteristics and advantages of the invention will become better apparent from the description of a preferred, but not exclusive, embodiment of the device according to the invention, which is illustrated by way of non-limiting example in the accompanying drawings wherein:

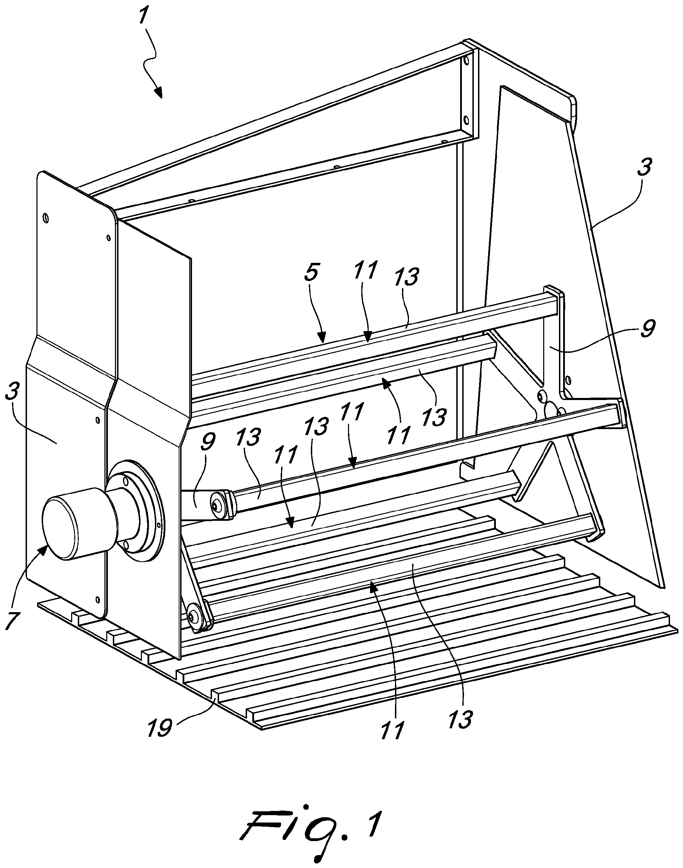

Figure 1 is a perspective view of a device according to the invention, installed on a vehicle;

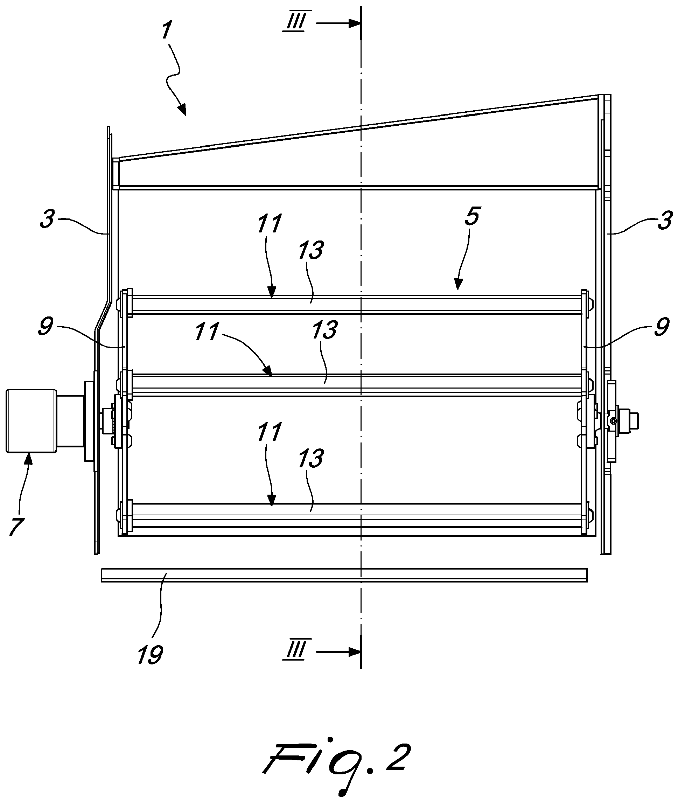

Figure 2 is a front elevation view of the device in Figure 1;

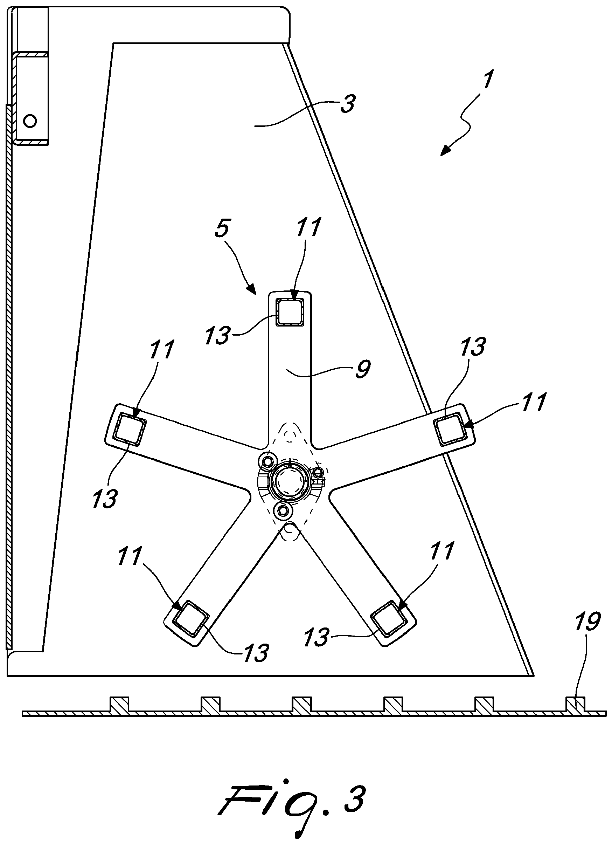

Figure 3 is a cross-sectional view of the device shown in Figure 2, taken along the line II-II.

With reference to the figures, the device according to the invention, generally designated by the reference numeral 1, comprises two mutually opposite shoulders 3 that support a plurality of cages 5 that can rotate about their own axis and which are connected to motor means 7. Each one of the cages 5 is defined by a pair of mutually opposite plates 9 which are rotatably mounted respectively on one of the two shoulders 3, and by a plurality of longitudinal bars 11 that are fixed to the peripheral region of the plates 9. In each cage 5, the plates 9 are rigidly connected to each other exclusively by way of the longitudinal bars 11, and without a central shaft.

According to the invention, the bars 11 are tubular profiled members 13 that are quadrangular in cross-section. The tubular profiled members 13 advantageously constitute the supporting structure of the cage 5.

Advantageously the device 1 comprises a single rotatable cage 5. This makes it possible to limit the encumbrances of the device, while at the same time ensuring an efficient distribution of fodder or of other material in granules (for example in powder form) or in filaments, also by virtue of the absence, between the bars 11, of a rotating central shaft.

Advantageously the cage 5 has a number of bars 11 comprised between 3 and 10, and preferably equal to 5.

As mentioned, the tubular profiled members 13 advantageously have a quadrangular transverse cross-section, preferably such that the longitudinal cavity of the profiled member is surrounded by a metal wall that is at least 2 millimeters thick.

The length of the side of such transverse cross-section can be substantially comprised between 20 and 50 millimeters.

Furthermore the tubular profiled members 13 are advantageously made of a material such as stainless steel.

Advantageously the bars 11 of the cage 5 lie on a cylindrical geometric surface that has a diameter comprised between 200 and 500 millimeters.

Preferably the bars 11 have a longitudinal extension that is substantially parallel to the rotation axis of the cage 5.

At least one of the tubular profiled members with quadrangular cross-section 13 can optionally internally comprise a plurality of magnetic bodies distributed longitudinally within that profiled member 13. Such magnetic bodies are advantageously adapted to retain metallic material that may be present in the material in granules or in filaments, for example in order to prevent this from being dispensed to the animals if the material in granules or in filaments is fodder.

In the eventuality, not shown, that more than one cage 5 is used, then in each one of the cages 5, the bars 11 can be mutually equidistant along the peripheral region of the plates 9 and with respect to the rotation axis of the cage 5.

The present invention also relates to a fodder distribution vehicle which comprises a fodder reservoir with a fodder discharge outlet, on which is installed, at the discharge outlet, the device for the distribution of fodder 1.

The device 1 can further comprise a lower containment floor 19, which is preferably located under the cages 5, at them, and which is adapted to retain the fodder that is not expelled at the first attempt by the cages 5, but which, by falling vertically owing to gravity, proximate to, or through the cages 5, would otherwise end up under the vehicle without being dispensed to the animals. The action of rotation and expulsion of the fodder exerted by the cages 5 preferably also affects the region of the device 1 adjacent to the lower containment floor 19, thus preventing the fodder 15 from accumulating on the surface 19. Advantageously, the containment floor 19 can also be defined by the upper surface of a conveyor belt which is adapted to assist the action of expulsion of the fodder exerted by the rotating cages 5.

Advantageously the motor means 7 are configured to rotate the cage 5 at a rate comprised between 140 and 220 rpm.

The dimensions of the cage 5, the distribution and number of the bars 11, together with the aforementioned rotation speed of the cage 5, are advantageously such as to ensure optimal performance levels in dispensing, in particular of fodder.

In practice it has been found that the device according to the invention fully achieves the set aim since it enables an efficient distribution of the material in granules or in filaments.

Another advantage of the device, according to the invention, consists in that it prevents phenomena of becoming engulfed caused by material in granules or in filaments, for example with material in filaments such as straw, while ensuring dispensing at high volumes.

Another advantage of the device, according to the invention, consists in that it has a structure that is simple and at the same time strong.

The device, thus conceived, is susceptible of numerous modifications and variations, all of which are within the scope of the appended claims. Moreover, all the details may be substituted by other elements of equivalent utility.

In practice, the materials employed, as well as the dimensions, may be any according to requirements and to the state of the art.

The disclosures in Italian Utility Model Application No. 202016000060813 (UA2016U128537) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for distributing material in granules or in filaments (1), which comprises two mutually opposite shoulders (3) that support at least one cage (5) that can rotate about its own axis and is connected to motor means (7), said cage (5) being defined by a pair of mutually opposite plates (9) that are mounted so that they can rotate on a respective one of said shoulders (3) and by a plurality of longitudinal bars (11) fixed to the peripheral region of said plates (9), said plates (9) being rigidly connected to each other exclusively by way of said bars (11) and without a central shaft, **characterized in that** said bars (11) are tubular profiled members with a quadrangular transverse cross-section (13).

2. The device (1) according to claim 1, wherein said at least one rotatable cage (5) is constituted by a single rotatable cage (5).

3. The device (1) according to claim 1 or 2, wherein said cage (5) has a number of bars (11) comprised between 3 and 10, preferably equal to 5.

4. The device (1) according to one or more of the preceding claims, wherein the length of the side of said quadrangular cross-section is comprised between 20 and 50 millimeters.

5. The device (1) according to one or more of the preceding claims, wherein said tubular profiled member (13) is made of a material such as stainless steel, with a thickness of the material of at least 2 millimeters.

6. The device (1) according to one or more of the preceding claims, wherein said bars (11) of said cage (5) lie on a cylindrical geometric surface that has a diameter comprised between 200 and 500 millimeters.

7. The device (1) according to one or more of the preceding claims, wherein said bars (11) have a longitudinal extension that is parallel to the rotation axis of said cage (5).

8. The device (1) according to one or more of the preceding claims, wherein at least one of said tubular profiled members (13) comprises internally a plurality of magnetic bodies distributed longitudinally within said at least one tubular profiled member (13).

9. A fodder distribution vehicle, comprising a fodder reservoir with a fodder discharge outlet, **characterized in that** it comprises the device (1) according to one or more of the preceding claims at said discharge outlet.
